# EUROPEAN PATENT SPECIFICATION

(11) **EP 3 924 530 B1**
(45) Date of publication and mention of the grant of the patent: **21.02.2024**
(21) Application number: 20772875.9
(22) Date of filing: 18.03.2020
(51) Int. Cl.: F28F 21/08, C22C 19/05, B23K 35/30

(54) **NICKEL BASED BRAZING ALLOY**
LÖTLEGIERUNG AUF NICKELBASIS
ALLIAGE DE BRASAGE À BASE DE NICKEL

(30) Priority: 18.03.2019 TR 201903983
(43) Date of publication of application: 22.12.2021
(73) Proprietor: Sentes Bir Metalurji Kimya Enerji Uretim Ve Geri Donusum Teknolojileri Sanayi Ticaret Anonim Sirketi, Izmir (TR)
(72) Inventor: TUNÇELLI , Mülayim, Izmir (TR)
(86) International application number: PCT/TR2020/050214
(87) International publication number: WO 2020/190241

(56) References cited:
- EP-A1- 0 014 335
- EP-A1- 3 162 909
- WO-A1-2018/198906
- CA-A- 572 451
- US-A- 4 302 515
- US-A- 5 133 812
- US-A1- 2015 168 088
- US-A1- 2017 151 639

## Description

### Technological Field

The invention relates to nickel-based brazing alloys which are used in combining the stainless steel parts exposed to exhaust gas.

### State of the Art:

As a result of the increasing restrictions of the countries, exhaust gas of the internal combustion engine is required to have less emission. There are heat exchangers which passes the exhaust gas through different processes in the emission reduction technologies. Heat exchangers form a part of the EGR (Exhaust Gas Recirculation) system. Heat exchangers are generally manufactured from stainless steel and through which on one hand exhaust gas passes and on the other hand water passes and thus the circulation is provided. The exhaust gas is corrosive and also this part must be corrosion resistant. Since brazing regions are also corrosion resistant, in general nickel based brazing alloys are used in the manufacture of these devices.

There are some disadvantages of standard brazing alloys. For example; it melts at high temperature just like BNi-5 alloy in standard of AWS 5.8, brazing process is performed approximately at 1200 °C. High melt temperature leads to the growth of the grain in the base metal during brazing process. The growth of grain decreases the mechanical strength and corrosion resistance of BNi-5 alloy.

BNi-2 alloy in AWS 5.8 standard contains a high ratio of Boron element. When brazing process is being performed, the boron diffuses into the stainless steel and makes the material brittle and leads to a decrease in the mechanical strength of the base metal. Also it has low corrosion resistance based on its low chromium content. Although the BNi-7 alloy in AWS 5.8 standard has a low melting temperature, since it does not have a high brazing strength, it is not suitable for use. Although the BNi-14 alloy in AWS 5.8 standard is an alloy which is substantially newly developed and is newly included in the standards, its chromium content does not provide sufficient corrosion resistance.

In the US patent No US2009110955 (A1) mentioned in the literature research made, amorphous, ductile brazing foil in NiCrBPSiCXY composition is described. Possible elements of X in the patented composition are as follows; Mo, Nb, Ta, W and Cu; the possible elements of Y are Fe and Co. In this patent, the processes which enable changes in thickness in the sectional area of the foil which is continuously manufactured with a length of 200 m in addition to the alloy composition, to be minimized compared to the rival products are also put under protection. The feature of aforementioned alloy is that its ductility is increased. There is no statement related to the corrosion resistance.

US patent document No US9486882 B2 which is encountered in another literature study relates to a nickel based alloy used for brazing the heat exchangers made of stainless steel, EGR coolers and water heaters. It is stated that the alloy has a high corrosion resistance. In the chemical composition of the alloy, the following elements are included; Cr, Cu, Mo, P, Si, Sn, Ni. Aforementioned alloy is a brazing cake consisting of the brazing powder or powder and binder. The corrosion resistance was evaluated by taking the mass loss into consideration. In the alloy subject to specification, there are no Cu and Sn elements, as a novelty V element is included in order to increase the corrosion resistance and can be produced as a brazing foil.

There are Fe, Ni, Cr, Mo, Cu, Si, B and P elements in the content of the chemical composition of said alloy disclosed in patent document No US20100028716 A1 which is encountered in another literature study. The alloy mentioned here is a brazing foil. The corrosion tests were performed by taking the mass loss into consideration. As a novelty, V element is contained in the alloy subject to specification and there is no Cu element and corrosion analysis was made by taking SEM analyses into consideration. Its advantage is to provide detection of the beginning areas of the corrosion at high resolution.

Again, there are Ni, Cr, B, P, Si, Mo, X and Y elements in the content of the chemical composition of said alloy disclosed in patent document No US20150158126 A1 which is encountered in another literature study. Possible elements of X are defined as; Nb, Ta, W, Cu, C, Mn; the possible elements of Y are defined as Fe and Co. The alloy mentioned here is a brazing foil. The corrosion tests were performed by taking the mass loss into consideration in the samples which are brazed at different brazing temperatures. A metallographic examination was performed. As a novelty, V element is contained in the alloy subject to specification and corrosion analysis was made by taking SEM analyses into consideration. Its advantage is to provide detection of the beginning areas of the corrosion at high resolution.

There are Ni, Cr, Fe, Si, B, Mo elements in the content of the chemical composition of said alloy disclosed in patent document No US6200690 B1 which is encountered in another literature study. In respect thereof, the brazing alloy used in brazing the stainless steel in the heat exchangers is disclosed. Mechanical behaviors of the brazed samples at different temperatures and variable times are examined in the patent. No examination is performed related to the corrosion. There is V element in the alloy subject to specification. EP3162909 discloses a brazing Ni-base amorphous alloy ribbon suitable for brazing of metal members such as stainless steel members, having a composition represented by a composition formula: Ni100-d-x-y-z-f-g Crd Px Siy Bz Cf Ng, where in units of mass%, 22.00 ≤ d ≤ 29.00, 4.00 ≤ x ≤ 8.00, 1.00 ≤ y ≤ 7.00, 0 < z ≤ 0.20, 0.005 ≤ f ≤ 0.100, 0.001 ≤ g ≤ 0.050, and 7.00 ≤ x + y ≤ 13.00.

Consequently, nickel based brazing alloy is required in which the state of the art is exceeded, the disadvantages are eliminated.

### Brief Description of the Invention

The invention is a nickel based brazing alloy which exceeds the state of the art, eliminates the disadvantages and has some additional features.

The aim of the invention is to provide a novel nickel based brazing alloy which exhibits more resistance to corrosion compared to other alloys in the technical field where it is used, by means of the addition of vanadium.

Another aim of the invention is to provide a novel nickel based brazing alloy whose melting temperature is decreased along with its increased corrosion resistance.

Another aim of the invention is to provide a novel nickel based brazing alloy which increases the corrosion resistance of the stainless steel parts used in heat exchangers included in the internal combustion engines.

Another aim of the invention is to provide a novel nickel based brazing alloy which can be used as brazing foil, brazing cake and brazing powder.

The invention is disclosed in the appended claims.

### Description of the Figures:

The invention will be described with reference to the accompanying drawings, thus the characteristics of the invention will be understood clearly. However, the aim of this is not to limit the invention with such determined embodiments. On the contrary, it is aimed to cover all alternatives, amendments and equivalents which may be contained in the field defined by the accompanying claims. It is to be understood that the details shown are only shown for the sake of illustrating the preferred embodiments of the present invention and presented for both illustrating the methods and for providing description of the rules of the invention and the conceptual features of the invention to be easily understood. In these figures;
- Figure - 1: is the view of A1 mixture before K1.1 corrosion test.
- Figure - 2: is the view of A1 mixture after K1.1 corrosion test.
- Figure - 3: is the view of A2 mixture before K1.1 corrosion test.
- Figure - 4: is the view of A2 mixture after K1.1 corrosion test.
- Figure - 5: is the view of A3 mixture before K1.1 corrosion test.
- Figure - 6: is the view of A3 mixture after K1.1 corrosion test.
- Figure - 7: is the view of A4 mixture before K1.1 corrosion test.
- Figure - 8: is the view of A4 mixture after K1.1 corrosion test.
- Figure - 9: is the view of A5 mixture before K1.1 corrosion test.
- Figure - 10: is the view of A5 mixture after K1.1 corrosion test.
- Figure - 11: is the view of A1 mixture before K2.1 corrosion test.
- Figure - 12: is the view of A1 mixture after K2.1 corrosion test.
- Figure - 13: is the view of A2 mixture before K2.1 corrosion test.
- Figure - 14: is the view of A2 mixture after K2.1 corrosion test.
- Figure - 15: is the view of A3 mixture before K2.1 corrosion test.
- Figure - 16: is the view of A3 mixture after K2.1 corrosion test.
- Figure - 17: is the view of A4 mixture before K2.1 corrosion test.
- Figure - 18: is the view of A4 mixture after K2.1 corrosion test.
- Figure - 19: is the view of A5 mixture before K2.1 corrosion test.
- Figure - 20: is the view of A5 mixture after K2.1 corrosion test.

The figures which enable to clarify this invention are enumerated as mentioned in the attached figure and they are given with their names herein below.

### Description of the Invention:

In this detailed description, the inventive nickel based brazing alloy is described by means of examples only for clarifying the subject manner such that no limiting effect is created. Nickel based brazing alloy to be used in the stainless steel parts of the heat exchangers of the internal combustion engines which provides fuel cooling and exhaust gas recirculation, is disclosed in the description.

The inventive nickel based brazing alloy is used to increase corrosion resistance in stainless steel parts of the internal combustion engines. It is prepared by melting raw materials under a protective atmosphere within the alloy induction furnace. Delivery of the raw material is respectively as nickel, nickel boron, Ferro boron, silicium, chrome, molybdenum, Ferro vanadium. The aim for adding Ferro vanadium in the alloy is to decrease the melting degree of vanadium. The melting degree of vanadium is 1910 °C, on the other hand the melting degree of Ferro vanadium (17.5 % Fe) 1600 °C. Maximum temperature during melting process is 1480 °C. The casting temperature of the alloy with vanadium is 1200-1230 °C. However it is possible to add pure vanadium to the mixture. The composition percentage of the alloy is as follows;
- Molybdenum (Mo) in a range of between 0.1 - 1 %
- Vanadium (V) in a range of between 0.1 - 1 %
- Ferro (Fe) in a range of between 0.4 - 1,2 %
- Phosphorus (P) in a range of between 4 - 9 %
- Silicium (Si) in a range of between 0.5 - 2 %
- Boron (B) in a range of between 0.1 - 1 %
- Chromium (Cr) in a range between 22 - 28 %
- Nickel (Ni) in a range of between 55,8 - 72,8 %.

The reason for adding vanadium (V) into the alloy is to make the alloy to be more resistive to corrosion. In order to observe the corrosion resistance of the regions exposed to exhaust gas, "VDA 230-214 Resistance of metallic materials to condensate corrosion in exhaust gas-carrying components" standard test method is used. This standard comprises 4 different tests. PH and salt ratio are different from test to test. In order to prove the fact that vanadium (V) content increases the corrosion resistance, "K1.1" and "K2.1" tests within the standards were applied to the samples.

For the purpose of comparing in K1.1 and K2.1 tests, 5 alloy contents which have different mixture ratios are determined. These alloys are named as A1, A2, A3, A4, and A5 respectively, wherein alloys A1, A2 and A5 are comparative examples. The percentages of elements per mass included in each alloy are as the following.

| **Alloy** | **Ni wt.%** | **Fe wt.%** | **Cr wt.%** | **Si wt.%** | **B wt.%** | **P wt.%** | **Mo wt. %** | **V wt.%** | **Ts (°C)** | **T_{L} (°C)** |
|---|---|---|---|---|---|---|---|---|---|---|
| A1 | 65.9 | 0.4 | 23 | 1.5 | 0.5 | 8.2 | 0.5 | - | 900 | 1020 |
| A2 | 66 | 0.4 | 23 | 1.5 | 0.5 | 8.2 | - | 0.4 | 870 | 1010 |
| A3 | 65.8 | 0.4 | 23 | 1.5 | 0.5 | 8.2 | 0.5 | 0.1 | 930 | 1045 |
| A4 | 65.5 | 0.4 | 23 | 1.5 | 0.5 | 8.2 | 0.5 | 0.4 | 925 | 1040 |
| A5 | 66.4 | 0.4 | 23 | 1.5 | 0.5 | 8.2 | - | - | 870 | 915 |

Fe, Cr, Si, B and P ratios in A1, A2, A3, A4 and A5 alloys were stable according to the table. MO and V ratios were changed. The mass percentages of the alloys are balanced with Ni element. In the alloy 1 (A1), there was 0.5% Mo by mass, Mo was not added into A2 but there was 0.4% V. There were 0.5% Mo by mass and 0.1% V by mass in A3. V amount in A4 is determined as 0.4% by mass and Mo amount is determined as 0.5 % by mass. There was no addition of Mo and V in A5.

The alloys were kept in K1.1 and K2.1 solutions for applying K1.1 and K2.1 corrosion tests and the results were observed. K1.1 solution comprises; 3.4 ml nitric acid of 65 % dissolved in 500 ml water, 1,4 ml sulfuric acid of 95 - 97 % and 16.5 mg NaCl solution dissolved in 1000 ml water. PH value of K1.1 mixture was measured as 1.2. K2.1 comprises; anhydrous 100 % acetic acid, 49 ml formic acid with 98 - 100 % ratio, 16.5 mg NaCl solution dissolved in 1000 ml water. PH value was determined as 3.5.

VDA K1.1 test was applied to the first 5 samples; the test duration was 6 weeks. Samples were retained in K1.1 solution during 6 weeks. Before the test started and after it was retained in the solution during 6 weeks, a section was taken from the sample, the images were taken by Scanning Electron Microscope (SEM) and corrosion examination was performed. K2.1 test was applied to the other 5 samples. The test duration was 6 weeks. Samples were retained in K2.1 solution during 6 weeks. Before the test started and after it was retained in the solution during 6 weeks, a section was taken from the sample, the images were taken by Scanning Electron Microscope (SEM) and corrosion examination was performed.

SEM analysis views of A1, A2, A3, A4 and A5 alloys before and after K1.1 and K2.1 corrosion tests were given. The view of A1 alloy before it is subjected to K1.1 test is given in Figure 1, its view after it is subject to test is given in Figure 2. The view before it is subjected to K2.1 test is given in Figure 11, its view after it is subject to test is given in Figure 12. A1 alloy comprises 0.5% molybdenum (Mo) by mass and does not comprise any vanadium (V). When we observe the images, A1 alloy exhibited a negative effect against the corrosion.

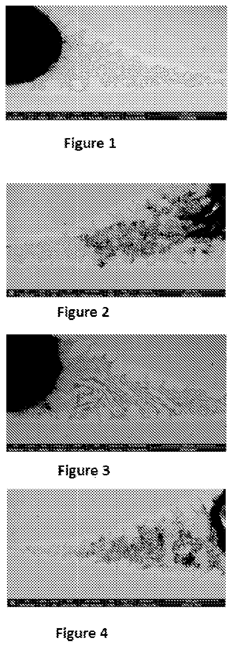

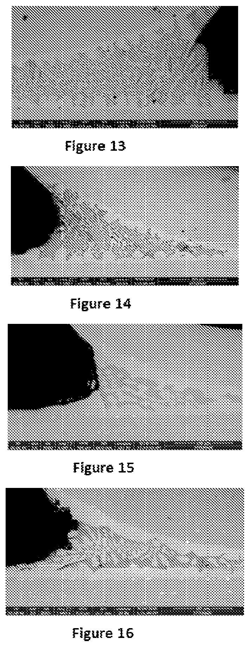

The view of A2 alloy before it is subjected to K1.1 test is given in Figure 3, its view after it is subject to test is given in Figure 4, its view before it is subjected to K2.1 test is given in Figure 13, its view after it is subject to test is given in Figure 14. A2 alloy does not comprise any molybdenum (Mo) and comprises 0.4% vanadium (V) by mass. When we observe the images, it is seen that A2 alloy exhibited a negative effect against the corrosion.

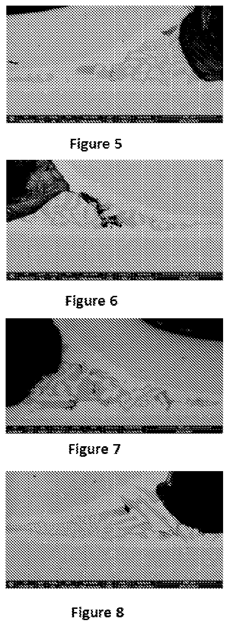

The view of A3 alloy before it is subjected to K1.1 test is given in Figure 5, its view after it is subject to test is given in Figure 6, its view before it is subjected to K2.1 test is given in Figure 15, its view after it is subject to test is given in Figure 16. A3 alloy comprises 0.5 % molybdenum (Mo) by mass and 0.1 % vanadium (V) by mass. When we observe the images, A3 alloy exhibited a positive effect against the corrosion.

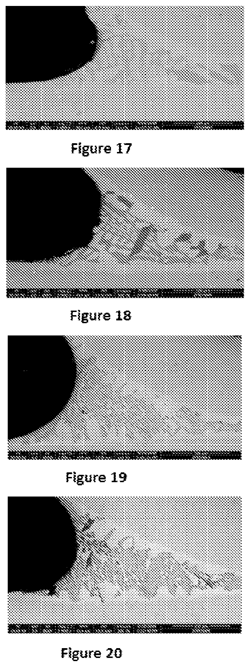

The view of A4 alloy before it is subjected to K1.1 test is given in Figure 7, its view after it is subject to test is given in Figure 8, its view before it is subjected to K2.1 test is given in Figure 17, its view after it is subject to test is given in Figure 18. A4 alloy comprises 0.5 % molybdenum (Mo) by mass and 0.4 % vanadium (V) by mass. When we observe the views, A4 alloy exhibited a more positive effect against corrosion than A3 alloy.

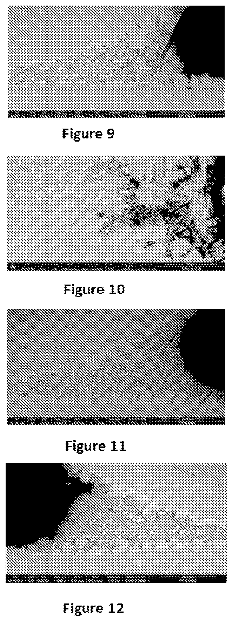

The view of A5 alloy before it is subjected to K1.1 test is given in Figure 9, its view after it is subject to test is given in Figure 10, its view before it is subjected to K2.1 test is given in Figure 19, its view after it is subject to test is given in Figure 20. A5 alloy does not comprise any molybdenum (Mo) and vanadium (V). When we observe the images, A4 alloy exhibited a negative effect against the corrosion.

It is seen that Mo and V additions supported formation of dendritic structure in the alloy in SEM images of the samples from K1.1 and K2.1 tests. Under normal conditions, grain boundaries are potential regions in the coaxial grain structure and grain boundary corrosion was observed. In behave cathodic intragranularly. According to test results, it is shown that vanadium (V) additive brazing alloy increased the brazing behavior and thus the corrosion resistance of the stainless steel parts of the heat exchangers exposed to the exhaust gas of the internal combustion engines. However, when vanadium (V) is used together with molybdenum (Mo), it increases the corrosion resistance. Also when molybdenum (Mo) is used alone, it does not show an effect increasing the corrosion resistance of the alloy.

## Claims

1. Nickel based brazing alloy which is used for increasing the corrosion resistance in stainless steel parts of the heat exchangers of the internal combustion engines that provide fuel cooling and exhaust gas recirculation, consisting of Ferro (Fe) in a range of between 0.4 - 1,2 %, Phosphorus (P) in a range of between 4 - 9 %, Silicium (Si) in a range of between 0.5 - 2 %, Boron (B) in a range of between 0.1 - 1 %, Chromium (Cr) in a range of between 22 - 28 %, Nickel (Ni) in a range of between 55,8 - 72,8 %, **characterized in that**, it comprises; Molybdenum (Mo) in a range of between 0.1 - 1 %, Vanadium (V) in a range of between % 0.1 - 1.

2. Nickel based brazing alloy according to claim 1; **characterized in that;** vanadium (V) in its content is Ferro vanadium in order to decrease the melting degree of the nickel based brazing alloy.

## Patentansprüche

1. Hartlot auf Nickelbasis, das zur Erhöhung der Korrosionsbeständigkeit in Edelstahlteilen der Wärmetauscher von Verbrennungsmotoren verwendet wird, die für die Kraftstoffkühlung und Abgasrückführung sorgen, bestehend aus Ferro (Fe) in einem Bereich zwischen 0,4 - 1,2%, Phosphor (P) in einem Bereich zwischen 4 - 9%, Silizium (Si) in einem Bereich zwischen 0,5 - 2%, Bor (B) in einem Bereich zwischen 0,1 - 1%, Chrom (Cr) in einem Bereich zwischen 22 - 28%, Nickel (Ni) in einem Bereich zwischen 55,8 - 72,8%, **dadurch gekennzeichnet, dass** es Molybdän (Mo) in einem Bereich zwischen 0,1 - 1%, Vanadium (V) in einem Bereich zwischen 0,1 - 1% umfasst.

2. Hartlot auf Nickelbasis nach Anspruch 1, **dadurch gekennzeichnet, dass** Vanadium (V) in seinem Gehalt Ferro-Vanadium ist, um den Schmelzgrad des Hartlotes auf Nickelbasis zu verringern.

## Revendications

1. Alliage de brasage à base de nickel utilisée pour augmenter la résistance à la corrosion des pièces en acier inoxydable des échangeurs thermiques des moteurs à combustion interne qui assurent le refroidissement du carburant et la recirculation des gaz d'échappement, constituée de
Ferro (Fe) dans une gamme comprise entre 0,4 -1,2%, Phosphore (P) dans une gamme comprise entre 4 - 9%, Silicium (Si) dans une gamme comprise entre 0,5 - 2%, Bore (B) dans une gamme comprise entre 0,1 - 1%, Chrome (Cr) dans une gamme comprise entre 22 - 28%, Nickel (Ni) dans une gamme comprise entre 55,8 - 72,8%, **caractérisé en ce qu'**elle comprend: Molybdène (Mo) dans une gamme comprise entre 0,1 - 1%, Vanadium (V) dans une gamme comprise entre 0,1 -1%.

2. Alliage de brasage à base de nickel selon la revendication 1, **caractérisé en ce que** le vanadium (V) dans son contenu est du ferrovanadium afin de diminuer le degré de fusion de l'alliage de brasure à base de nickel.
